# EUROPÄISCHE PATENTANMELDUNG

(11) **EP 4 588 963 A1**
(43) Veröffentlichungstag der Anmeldung: **23.07.2025**
(21) Anmeldenummer: 24152389.3
(22) Anmeldetag: 17.01.2024
(51) Int. Cl.: C08J 5/22, B01J 47/12, C02F 1/469, C08G 65/40, H01M 4/88, H01M 8/1004, H01M 8/1053

(54) **HERSTELLUNG EINER KATALYTISCH BESCHICHTETEN ANIONENAUSTAUSCHMEMBRAN**

(71) Anmelder: Evonik Operations GmbH, 45128 Essen (DE)
(72) Erfinder: WATZELE, Sebastian, 45657 Recklinghausen (DE); KÖHLING, Christoph, 48249 Dülmen (DE); WILD, Andreas, 45721 Haltern am See (DE); HUTH, Michael, 63477 Maintal (DE); CORNELIUS, Maximilian, 61118 Bad Vibel (DE)
(74) Vertreter: Evonik Patent Association

(57) **Zusammenfassung**

Die Erfindung befasst sich katalytisch beschichteten Anionenaustauschmembranen und deren Herstellung. Die katalytisch aktiv beschichteten Anionenaustauschmembranen werden in elektrochemischen Zellen eingesetzt, insbesondere zur Wasserelektrolyse. Der Erfindung lag die die Aufgabe zu Grunde ein Verfahren zur Herstellung einer elektrokatalytisch aktiv beschichteten Anionenaustauschmembran anzugeben, deren Beschichtung porös ist und damit die in der Beschichtung befindlichen, elektrokatalytisch aktiven Zentren gut für die Reaktanten zugänglich sind. Eine Grundidee des erfindungsgemäßen Verfahrens besteht darin, in die Katalysatorbeschichtung partikuläres anorganisches Material als Platzhalter einzuarbeiten, die Beschichtung zu verfestigen und anschließend das anorganische Material wieder aus der Beschichtung auszulaugen. Durch die Laugung wird das anorganische Material in ein wasserlösliches Produkt umgewandelt, welches leicht aus der Beschichtung ausgewaschen werden kann. Zurück bleiben Hohlräume (Poren) an den Stellen, wo sich das partikuläre anorganische Material zuvor innerhalb der Beschichtung befunden hat. Das anorganische Material übernimmt daher innerhalb der Beschichtungszusammensetzung die Funktion eines Strukturgebers, der im Rahmen der katalytisch aktiven Beschichtung verloren geht.

## Beschreibung

Die Erfindung befasst sich katalytisch beschichteten Anionenaustauschmembranen und deren Herstellung. Die katalytisch aktiv beschichteten Anionenaustauschmembranen werden in elektrochemischen Zellen eingesetzt, insbesondere zur Wasserelektrolyse.

Anionenaustauschmembranen (engl.: anion exchange membranes - AEM) werden in elektrochemischen Zellen verbaut. Sie dienen in der Regel dazu, ein Vermischen von in der Zelle produzierten Substanzen wie Wasserstoff und Sauerstoff zu verhindern und dabei gleichzeitig den ionischen Ladungstransport zu ermöglichen. Die in der Zelle praktizierten elektrochemischen Reaktionen werden dadurch effizienter und deutlich sicherer.

Ein Beispiel für einen elektrochemischen Prozess, der mit Hilfe einer Anionenaustauschmembran durchgeführt wird, ist die Herstellung von Wasserstoff und Sauerstoff durch alkalische Wasserspaltung. Dabei wird eine Anionenaustauschmembran als Separator zwischen den Elektroden der Zelle eingesetzt. Deswegen wird das Verfahren auch als AEM basierte Wasserspaltung (engl. AEM water electrolysis, AEMWE) bezeichnet. Da die Reaktion im alkalischen Milieu erfolgt, wird die AEM basierte Wasserspaltung auch oft alkalische Membranwasserelektrolyse (engl. alkaline membrane water electrolysis) genannt.

Bei der AEM basierten Wasserspaltung wird eine elektrochemische Zelle mit Wasser beziehungsweise mit einem basischen Elektrolyten auf Wasserbasis gefüllt und eine Spannung zwischen Anode und Kathode angelegt. Auf Kathodenseite wird das Wasser (H₂O) in Wasserstoff (H₂) und Hydroxid-Ionen (OH-) zerlegt (Gleichung K). Die Anionenaustauschmembran transportiert die Hydroxid-Ionen auf die Anodenseite, wo diese zu Sauerstoff (Oz) oxidiert werden (Gleichung A). Auf diese Weise entsteht auf der Anodenseite Sauerstoff, währenddessen das Wasserstoff auf der Kathodenseite entsteht. Folglich wird die Anodenseite auch Sauerstoffseite genannt, währenddessen die Kathodenseite auch Wasserstoffseite heißt.

2 H₂O + 2 e⁻ → H₂ + 2 OH- (K) Reduktion / Kathodenreaktion

2 OH⁻ → ½ Oz + H₂O + 2 e⁻ (A) Oxidation / Anodenreaktion

Um den beschriebenen Effekt zu ermöglichen, muss die Anionenaustauschmembran zwischen Anode und Kathode die Hydroxid-Ionen leiten. Zugleich muss sie elektrisch isolieren, damit es nicht zu einem elektrischen Kurzschluss zwischen Anode und Kathode kommt. Schließlich muss die Anionenaustauschmembran nach Möglichkeit gasdicht sein, damit es nicht zu einer Rückvermischung der entstehenden Gase kommt. Zudem muss die Anionenaustauschmembran den alkalischen Bedingungen, die in der AEM Wasserspaltung herrschen, Stand halten. Diese Eigenschaften werden von speziellen Anionen leitenden Polymeren (auch genannt: Anionen-leitfähige lonomere) erfüllt.

Um die Reaktion zu beschleunigen, werden sowohl auf kathodischer als auch auf anodischer Seite katalytisch aktive oder aktivierbare Substanzen (auch genannt: Elektrokatalysatoren) eingebaut. Dies geschieht durch Einbringen von katalytisch aktiven oder aktivierbare Schichten in die Zelle oder durch katalytisch aktive oder aktivierbare Beschichtungen von Zellbauteilen. Diese können sich auf einem eigens dafür in die Zelle eingebrachten Substratmaterial oder auf einer porösen Transportschicht befinden (engl. catalyst-coated substrate, CCS) oder aber die Membran kann direkt mit katalytisch aktivem Material beschichtet sein (engl. catalyst-coated membrane, CCM).

Einen hervorragenden Überblick über Aufbau und Werkstoffe der gegenwärtig in der AEM basierten Wasserspaltung eingesetzten elektrochemischen Zellen bieten:
Miller, Hamish Andrew et al: Green hydrogen from anion exchange membrane water electrolysis: a review of recent developments in critical materials and operating conditions. Sustainable Energy Fuels, 2020, 4, 2114 DOI: 10.1039/c9se01240k
Nachdem grundsätzliche Fragen der Materialwahl und der Betriebsbedingungen geklärt sind, stellt sich bei der Entwicklung von Anlagen zum Betrieb von elektrochemischen Prozessen das Problem, wie einzelne Bestandteile der elektrochemischen Zellen im industriellen Maßstab gefertigt werden können.

So ist es im Interesse der Energieeffizienz, den Innenwiderstand der elektrochemischen Zelle möglichst gering zu halten. Dies kann mit einem kompakten Aufbau ermöglicht werden, indem die Elektroden besonders dicht an dem Separator platziert werden und der Elektrokatalysator auch möglichst dicht an der jeweiligen Elektrode platziert wird.

Ein Weg, diesen kompakten Aufbau zu erreichen, ist die bereits erwähnte CCM-Bauweise, bei der die Anionenaustauschmembran mit einer Beschichtung versehen wird, die katalytisch aktives Material enthält. So präpariert, bringt die Anionenaustauschmembran beim Zusammenbau der Zelle den Katalysator gleich mit. Auf diese Weise entfällt bei der Assemblierung der Zelle das Handhaben der Katalysators und es wird ein kompakter Zellaufbau erreicht, der einen geringen Innenwiderstand verspricht.

Bei der Beschichtung von Anionenaustauschmembranen mit Elektrokatalysatoren ist zu beachten, dass es sich bei Substrat (Membran) und Beschichtungsstoff (Katalysator) um sehr unterschiedliche Materialien handelt: Die Membran besteht in der Regel aus einem ionenleitenden Spezial-Polymer (lonomer) in Gestalt einer Folie, währenddessen als Elektrokatalysator meist Metalle, Metalloxide oder metallorganische Komplexe in partikulärer Form eingesetzt werden. Um die katalytisch aktiven Partikel auf der Folie zu immobilisieren, werden polymere Haftvermittler eingesetzt, welche die Partikel mit der Membran verkleben. Bei den Haftvermittlern kann es sich auch um lonomere handeln, aus einem Material wie die Anionenaustauschmembran. Aufgrund der Heterogenität der beteiligten Materialien ist die Herstellung von CCM nicht trivial.

Beim Immobilisieren des Elektrokatalysators auf der AEM ist außerdem zu beachten, dass die Katalysatorpartikel nicht allseitig von dem polymeren Haftvermittler umschlossen sind: Dies würde nämlich verhindern, dass die Reaktionsteilnehmer mit den katalytisch aktiven Zentren in Kontakt kommen. Im Extremfall bedeutet dies, dass die elektrochemische Reaktion gar nicht erst wie gewünscht stattfindet. Aber auch wenn lediglich ein Teil der katalytisch aktiven Zentren von Polymer verklebt sind, führt dies zu einer verminderten Effizienz, da die eingebrachte Katalysatormenge nicht vollständig genutzt wird. Insbesondere dann, wenn wertvolle Edelmetallkatalysatoren wie z.B. Iridium (Ir), Ruthenium (Ru), Platin (Pt), Gold (Au), Silber (Ag), Palladium (Pd), Rhenium (Re) oder Rhodium (Rh) eingesetzt werden, sollte im Interesse der Wirtschaftlichkeit des gesamten Prozesses möglichst das gesamte in der CCM enthaltene Edelmetall katalytisch verfügbar und nicht ungenutzt von Polymer kaschiert sein. Darüber hinaus entstehen bei vielen elektrochemischen Prozessen Gase, zum Beispiel bei der AEM basierten Wasserelektrolyse gemäß den Reaktionsgleichungen (A) und (K) molekularer Sauerstoff Oz und Wasserstoff H₂. Diese Gase bilden sich vor allem an der Grenzschicht zwischen Membran und Elektrokatalysator und müssen dort von dem Elektrolyt aufgenommen werden. Wenn die elektrokatalytisch aktiven Partikel zu dicht von polymeren Haftvermittler umschlossen sind, können die Gase nicht ungehindert von der CCM entweichen was sich wiederum negativ auf die Effizienz des Prozesses auswirkt. Andererseits führt aber eine zu sparsame Haftung der Katalysatorpartikel auf der Membran dazu, dass die entstehenden Gasblasen die Partikel von der Membran lösen und der Elektrolyt die Partikel fortspült. Dadurch wird die katalytische Aktivität der CCM mit der Zeit immer geringer.

Im Ergebnis gilt es daher, die elektrokatalytisch aktiven Partikel einerseits hinreichend fest auf der AEM zu immobilisieren, anderseits aber auch eine gute Zugänglichkeit der Reaktanten zu den katalytisch aktiven Zentren zu erlauben. Ein Ansatzpunkt, dies zu erreichen, besteht darin, die katalytisch aktive Beschichtung einer CCM porös auszuführen:
So schlägt die EP 4183900 A1 vor, als Haftvermittler zwischen Katalysator und Substrat ein Polymer mit intrinsischer Mikroporosität (PIM) zu verwenden. Durch die Einbettung der Katalysatoren in die PIM-Matrix wird die katalytisch aktive Beschichtung auf dem Substrat insgesamt porös. Allerdings sind die dort beschriebenen Polymere mit intrinsischer Mikroporosität selber nicht ionisch leitfähig. Dies bedeutet etwa im Fall der AEMWE, dass die Hydroxid-Ionen OH⁻nach dem Durchtritt durch die Membran ausschließlich durch den wässrigen Elektrolyt zu dem katalytisch aktiven Zentrum fließen. Die Hydroxid-Ionen gelangen also nicht direkt, sondern über einen Umweg zum Katalysator. Dadurch wird die Stromdichte in der Zelle reduziert, weswegen der Prozess verglichen mit einer CCM, bei dem die Katalysatorpartikel mit einem ionisch leitfähigen Haftvermittler (lonomer) auf dem Substrat immobilisiert sind, weniger energieeffizient erscheint.

Auf dem Gebiet der Brennstoffzellen, die mit Protonen leitenden Polymermembranen (proton exchange membrane - PEM) arbeiten, ist es bekannt, die PEM mit einer Katalysatorbeschichtung zu versehen, welche mit porösem Silica gefüllt ist (WO 2023096229 A1, WO 2023096230 A1, CN 114164438 B, JP 2023134869 A). Die mit porösem Silica gefüllte Schicht erlaubt eine bessere Permeabilität der Membran für Wasserstoff- und Sauerstoffgas. Da der dort verwendete Membranwerkstoff allerdings ausschließlich Protonen (H⁺) leitet, kann er in der alkalischen Wasserelektrolyse nicht eingesetzt werden, denn hier ist - wie oben ausgeführt - eine Leitfähigkeit für Hydroxid-Ionen (OH-) erforderlich.

Einen anderen Weg, um die Katalysatorschicht einer CCS ein Stück weit porös zu gestalten, hat die Forschungsgruppe um Min-Ha Kim begangen:
Kim et al.: Fe-doped Co3O4 nanostructures prepared via hard-template method and used forthe oxygen evolution reaction in alkaline media. Journal of Industrial and Engineering Chemistry, Volume 123, 2023, Pages 436-446, https://doi.org/10.1016/j.jiec.2023.03.062.

Kim et al. belegten Silicaperlen mit Eisen-dotierten Cobalt-Oxiden und beaufschlagten das erhaltene Material mit Kalilauge KOH. Sodann wurde mit Wasser und Ethanol gewaschen und wärmebehandelt. Auf diese Weise laugten Kim et al. die Silicaperlen aus, sodass der zurückbleibende Elektrokatalysator eine poröse Struktur erhielt. Der poröse, nunmehr silicafreie Elektrokatalysator wurde zu einer Tinte verarbeitet und auf eine Graphitelektrode aufgetragen. Die so katalytisch aktiv beschichtete Graphitelektrode (CCS) wurde mit einer AEM und einer weiteren Elektrode zu einer Membran-Elektroden-Einheit (Membrane Electrode Assembly- MEA) aufgebaut und diese in der basischen Wasserelektrolyse eingesetzt. Inwieweit diese Vorgehensweise geeignet ist, elektrokatalytisch aktives poröses Material auf eine Anionen-leitfähige Membran aufzutragen, ist nicht berichtet.

In Hinblick auf diesen Stand der Technik lag der vorliegen Erfindung die Aufgabe zu Grunde ein Verfahren zur Herstellung einer elektrokatalytisch aktiv beschichteten Anionenaustauschmembran anzugeben, deren Beschichtung porös ist und damit die in der Beschichtung befindlichen, elektrokatalytisch aktiven Zentren gut für die Reaktanten zugänglich sind. Die gute Zugänglichkeit verspricht eine hohe Effizienz der Reaktion. Außerdem soll die Beschichtung eine gute Gasdurchlässigkeit aufweisen, währenddessen die Membran insgesamt möglichst gasdicht sein soll. Des Weiteren sollen die in der Beschichtung befindlichen Elektrokatalysatoren gut an der Anionenaustauschmembran haften, damit sie nicht vom Elektrolyt ausgewaschen werden. Die katalytisch beschichtete Anionenaustauschmembran soll außerdem eine gute Leitfähigkeit für Hydroxid-Ionen aufweisen und im basischen Milieu stabil sein, damit sie in der alkalischen Wasserelektrolyse eingesetzt werden kann.

Gelöst werden diese Aufgabe dadurch, dass die katalytisch beschichtete Anionenaustauschmembran wie folgt herstellt wird:
a) es wird ein Substrat bereitgestellt, welches einen Anionen leitenden Membranwerkstoff enthält oder daraus besteht;
b) es wird eine Zusammensetzung bereitgestellt, die mindestens ein Lösemittel, mindestens ein im Lösemittel gelöstes Polymer, mindestens einen partikulären Elektrokatalysator, sowie ein vom Elektrokatalysator verschiedenes, partikuläres anorganisches Material enthält;
c) es wird eine Zusammensetzung auf das Substrat aufgetragen, sodass das Substrat einen die Zusammensetzung enthaltenden Auftrag erhält;
d) das Lösemittel wird aus dem Auftrag abgereichert, sodass das Substrat eine Schicht erhält, in welcher der partikuläre Elektrokatalysator sowie das davon verschiedene, partikuläre anorganische Material angereichert und über das Polymer auf dem Substrat immobilisiert sind;
e) es wird eine wässrige alkalische Lösung enthaltend mindestens ein Alkalimetall ausgewählt aus der Gruppe bestehend aus Natrium, Kalium und Lithium bereit gestellt;
f) die Schicht wird mit der wässrigen alkalischen Lösung beaufschlagt;
g) zumindest ein Teil des partikulären anorganischen Materials wird innerhalb der Schicht mit der alkalischen Lösung zu mindestens einem Produkt umgesetzt;
h) zumindest ein Teil des Produkts wird aus der Schicht ausgewaschen.

Auf diese Weise wird eine katalytisch beschichtete Anionenaustauschmembran erhalten, welche das Substrat und darauf aufgebracht die Schicht umfasst, wobei die Schicht nunmehr offene Poren aufweist.

Ein entsprechendes Verfahren zur Herstellung einer katalytisch beschichteten Anionenaustauschmembran ist somit ein erster Gegenstand der Erfindung.

Eine Grundidee des erfindungsgemäßen Verfahrens besteht darin, in die Katalysatorbeschichtung ein partikuläres anorganisches Material als Platzhalter einzuarbeiten, die Beschichtung zu verfestigen und anschließend das anorganische Material wieder aus der Beschichtung auszulaugen. Durch die Laugung wird das anorganische Material in ein wasserlösliches Produkt umgewandelt, welches leicht aus der Beschichtung ausgewaschen werden kann. Zurück bleiben Hohlräume (Poren) an den Stellen, wo sich das partikuläre anorganische Material zuvor innerhalb der Beschichtung befunden hat. Das partikuläre anorganische Material übernimmt daher innerhalb der Beschichtungszusammensetzung die Funktion eines Strukturgebers, der im Rahmen der katalytisch aktiven Beschichtung verloren geht.

Der Herstellprozess lässt sich somit grob in zwei Abschnitte unterteilen:
In einem ersten Abschnitt wird die Beschichtungszusammensetzung einschließlich des anorganischen Materials auf das Substrat aufgetragen und verfestigt. Der partikuläre Elektrokatalysator und das davon verschiedene anorganische Material werden so zusammen mit Hilfe des Polymers auf dem Substrat immobilisiert. Das Polymer dient dabei als Haftvermittler zwischen dem Substrat und dem darauf aufgetragenen Partikel (anorganisches Material und Elektrokatalysator). Das Anhaften wird dadurch bewerkstelligt, dass das Polymer in dem Lösemittel gelöst und zusammen mit dem Elektrokatalysator und dem anorganischem Material auf das Substrat aufgetragen wird. Dieser Auftrag wird dadurch verfestigt, dass das Lösemittel aus dem Auftrag wieder entfernt wird, etwa durch Trocknen. Das Polymer fällt dabei aus der Lösung aus und verklebt die Partikel mit dem Substrat. Auf diese Weise entsteht eine Vorstufe der späteren katalytisch beschichteten Anionenaustauschmembran. Die Beschichtung der Vorstufe ist noch nicht porös und enthält noch das partikuläre anorganische Material.

In einem zweiten Prozessabschnitt wird nun die Vorstufe mit dem Alkalihydroxid kontaktiert (Laugung). Dadurch wird das anorganische partikuläre Material innerhalb der Beschichtung zu einem auswaschbaren Produkt umgesetzt. Welches auswaschbare Produkt bei der Laugung gebildet wird, hängt von der Wahl des anorganischen Materials und der Lauge ab.

Als partikuläres anorganisches Material eignen sich insbesondere Siliciumdioxid (Silica - SiO₂) und Aluminiumoxid (Alumina - Al₂O₃) sowie Mischungen daraus (Silica/Alumina).

Wenn als partikuläres anorganisches Material Siliciumdioxid und als Lauge Kaliumhydroxid (KOH) eingesetzt wird, wird das in der Beschichtung der Vorstufe befindliche, partikuläre Siliciumdioxid (SiOz) zu den Produkten Kaliumsilikat (K₂SiO₃) und Wasser (H₂O) umgewandelt:

SiOz + 2 KOH ---> K₂SiO₃ + H₂O (1)

Das Produkt Kaliumsilikat ist wasserlöslich und lässt sich gut aus der Schicht auswaschen. Das Produkt Wasser ohnehin.

Wenn anstelle von Kalium ein anders Alkalimetall zur Laugung eingesetzt wird, etwa Lithium oder Natrium, entstehen analog zu Formel (1) Lithiumsilikat bzw. Natriumsilikat.

Wenn als partikuläres anorganisches Material Aluminiumoxid (Al₂O₃) eingesetzt wird, bilden sich mit der Lauge wasserlösliche Aluminate. Wird beispielsweise als Lauge Natriumhydroxid (NaOH) verwendet, entsteht gemäß Formel (2) das Produkt Natriumaluminat (NaAl(OH)₄):

Al₂O₃ + 2 NaOH + 3 H₂O → 2 NaAl(OH)₄ (2)

Natriumaluminat ist wasserlöslich und lässt sich leicht auswaschen.

Es ist auch möglich, gleichzeitig partikuläres Silica und partikuläres Alumina oder auch Mischphasen daraus einzusetzen. Dann laufen die oben beschriebenen Reaktionen während der Laugung parallel ab und es werden entsprechend mehrere Produkte parallel erhalten.

Die nach der Laugung in der Beschichtung befindlichen Silikate und/oder Aluminate lassen sich anschließend mit einer wässrigen Lösung aus der Beschichtung auswaschen, sodass die Beschichtung ihre Porosität erhält. Das Polymer und der partikuläre Elektrokatalysator bleiben durch die Laugung und Waschung unbeeinflusst und bilden letztendlich die katalytisch aktive Beschichtung der fertigen Anionenaustauschmembran.

Das finale Verfahrensprodukt, also die Anionenaustauschmembran versehen mit der porösen, katalytisch aktiven Beschichtung, ist ein weiterer Gegenstand der Erfindung. Das gilt auch für eine Anionenaustauschmembran, die durch das hier beschriebene Verfahren erhältlich ist.

Ein ebensolcher Erfindungsgegenstand bildet auch die Vorstufe der katalytisch beschichteten Anionenaustauschmembran, welche noch das partikuläre anorganische Material in seiner Beschichtung enthält und noch keine nennenswerte Poren aufweist.

Das erfindungsgemäße Verfahren hat nämlich den besonderen Vorteil, dass seine zwei Abschnitte an zwei unterschiedlichen Orten durchführbar ist: So ist es denkbar, die Herstellung der Vorstufe in einer CCM Fabrik durchzuführen (erster Abschnitt) und sodann die Vorstufe in eine elektrochemische Zelle einzubauen. Der zweite Abschnitt des Verfahrens, also die Formierung der Vorstufe in die finale Anionenaustauschmembran mit poröser Beschichtung durch Laugung und Waschung, erfolgt erst in der elektrochemischen Zelle, also am späteren Einsatzort der CCM. Die Behandlung mit Alkalilauge und die anschließende Waschung der Beschichtung kann nämlich in der Regel problemlos in der Zelle erfolgen, weil diese Laugenbeständig ist und über Mittel verfügt, die Beschichtung mit der Lauge bzw. der Waschflüssigkeit zu beaufschlagen. Bei den Mitteln handelt es sich um dieselben Einrichtungen, die im Elektrolysebetrieb der Zelle benötigt werden, um den Elektrolyt durch die Zelle zu pumpen. Da bei alkalischen Wasserelektrolyse als Elektrolyt ohnehin eine Alkalilauge eingesetzt wird, kann im einfachstenfalls der spätere Elektrolyt sowohl zur Laugung als auch zur Waschung verwendet werden. Im Extremfall erfolgt die Formierung der CCM erst im laufenden Elektrolysebetrieb. Auf diese Weise wird die Produktion der CCM vereinfacht, weil kein extra-Alkalihydroxid vorgehalten werden muss: Es wird einfach der ohnehin erforderliche Elektrolyt für die Formierung verwendet.

Aufgrund dieser bevorzugten Produktionsweise an zwei unterschiedlichen Orten ist die Vorstufe der katalytisch beschichteten Anionenaustauschmembran, welche zwischen diesen Orten transportiert werden muss, ein weiterer Gegenstand der Erfindung.

Wie bereits erwähnt, lassen sich insbesondere Siliciumdioxid, Aluminiumoxid oder Mischungen daraus als partikuläres anorganisches Material im vorliegenden Prozess einsetzen. Diese Stoffe bilden nämlich mit den in der Lauge enthaltenen Alkalimetallen wasserlösliche Produkte. Es lassen sich auch andere anorganische Stoffe dazu nutzen, sofern sie bei Verarbeitungsbedingungen in fester, partikulärer Form vorliegen und sich mit der Lauge zu auswaschbaren, bestenfalls wasserlöslichen Produkten umsetzen lassen.

Um der Schicht eine möglichst feine Porosität zu geben, sollte das eingesetzte anorganische Material als ein möglichst feines Pulver vorliegen. Vorzugweise wird flammpyrolytisch hergestelltes (pyrogenes) Aluminiumoxid und/oder Siliciumdioxid verwendet. Derartiges Material ist besonders fein und besonders rein.

Die flammpyrolytische Herstellung von Aluminiumoxid und/oder Siliciumdioxid wird im industriellen Maßstab praktiziert und ist unter anderem beschrieben von
C. Schulze Isfort, M. Rochnia: Production and physico-chemical characterisation of nanoparticles, Toxicology Letters, Volume 186, Issue 3, 2009, Pages 148-151, ISSN 0378-4274, DOI 10.1016/j.toxlet.2008.11.021
   und von
Bogdan, Anatoli and M. Kulmala: "Pyrogenic Silica and Alumina" , in Encyclopedia of Surface and Colloid Science, Third Edition. (2015) DOI 10.1081/E-ESCS3-120000089.

Das durch Flammpyrolyse erhaltene, anorganische Material ist zunächst durch seine große spezifische Oberfläche gekennzeichnet. Optimalerweise beträgt nach dem BET-Verfahren bestimmte, spezifische Oberfläche des partikulären anorganischen Material zwischen 50 m²/g und 450 m²/g. So hat das oben erwähnte Aerosil^{®} 300 eine BET-Oberfläche von etwa 300 m²/g . Die BET-Oberfläche wird wie üblich bestimmt mit Stickstoff-Adsorption gemäß der bekannten Methode von Brunauer, Emmett, Teller:
Brunauer, S., Emmett, P. H., Teller, E.: Adsorption of Gases in Multimolecular Layers. Journal of the American Chemical Society. Vol. 60, Issue 2, 1938, Pages 309-319 DOI: 10.1021/ja01269a023.

Die Bestimmung der BET-Oberfläche kann mit kommerziell erhältlichen Messegeräten automatisiert erfolgen, wie etwa mit dem Micromeritics 5 TriStar II 3020 V1.03.

Für den vorgesehenen Zweck geeignete, partikuläre anorganische Materialien sind unter anderem erhältlich von Evonik unter dem Markennamen AEROSIL^{®} (pyrogene Kieselsäure) und AEROXID^{®} (pyrogenes Aluminiumoxid). Besonders, jedoch nicht ausschließlich, die folgenden Produkte: AEROSIL^{®} OX 50, AEROSIL^{®} 90, AEROSIL^{®} 200, AEROSIL^{®} 300, AEROSIL^{®} 380 oder AEROXIDE ^{®} 130. Diese Materialien weisen eine spezifische Oberfläche (BET) von 10 m²/g bis 1000 m²/g auf, vorzugsweise 50 m²/g bis 400 m²/g. Desweitern besteht die Möglichkeit schon bereits dispergierte pyrogene Metalloxide und Kieselsäuren, in Wasser oder Lösungsmittel, einzusetzen. Solche Materialien sind zum Beispiel erhältlich von Evonik unter dem Markennamen AERODISP^{®} oder VP Disp^{®}. Besonders, jedoch nicht ausschließlich, die folgenden Produkte: AERODISP^{®} W 1226, AERODISP^{®} W 7225, AERODISP^{®} W 7512 S, AERODISP^{®} W7520, AERODISP^{®} W 7622, VP Disp^{®} W 7610 S oder AERODISP^{®} W 925.

Eine Besonderheit des pyrogenen Siliciumdioxid ist, dass sich seine Primärpartikel zu verzweigten Aggregaten (Sekundärpartikeln) zusammensetzen, die eine besonders vorteilhafte Porosität in der Schicht erzeugen. Die Primärpartikel haben eine Partikelgröße von bis zu 20 nm, die Aggregate sind etwa 100 nm klein.

Alternativ zu pyrogenem Siliciumdioxid kann auch Fällungskieselsäure als partikuläres anorganisches Material eingesetzt werden. Durch entsprechende Mahlung der gefällten Kieselsäure erhält diese eine spezifische Oberfläche (BET) im bevorzugten Bereich von 50 m²/g bis 400 m²/g. Fällungskieselsäure ist beispielweise von Evonik erhältlich unter dem Markennamen SIPERNAT^{®}.

Das in der Zusammensetzung eingesetzte Lösemittel dient dazu, das ebenfalls in der Zusammensetzung enthaltene Polymer zu lösen. Für diesen Zweck als besonders geeignet haben sich erwiesen die folgenden Lösemittel: Dimethylsulfoxid (DMSO), Ethanol (EtOH), Acetonitril (ACN). Diese Lösemittel lassen sich allein oder in Mischungen untereinander einsetzen.

Es empfiehlt sich, neben dem Lösemittel auch ein davon verschiedenes, flüssiges Dispergiermedium der Zusammensetzung zuzusetzen. Das Dispergiermedium ist vor allem dann erforderlich, wenn der von dem Elektrokatalysator und dem anorganischen Material gebildete Feststoffanteil der Zusammensetzung gegenüber dem Lösemittel so groß ist, dass die Zusammensetzung sich nicht vernünftig verarbeiten lässt. Durch Zugabe des Disperiermediums wird der Feststoffanteil in der gesamten Zusammensetzung reduziert, sodass die Zusammensetzung eine geringere Viskosität erzielt und sich besser verarbeiten lässt. Die Zusammensetzung wird mit dem Dispergiermedium verdünnt.

Unabhängig von der eingestellten Viskosität und Rezeptur bildet die Zusammensetzung immer eine Dispersion, nämlich mit einer flüssigen Phase aus im Lösemittel gelösten Polymer und ggf. dem flüssigen Dispergiermedium sowie mit einer ersten festen Phase aus dem Elektrokatalysator und einer zweiten festen Phase aus dem anorganischen Material. Abhängig von der eingestellten Viskosität und dem Feststoffanteil ist die Zusammensetzung als Tinte oder als Paste aufzufassen.

Als Dispergiermedium zum Verdünnen der Zusammensetzung eignen sich insbesondere Wasser (H2O), N-Methyl-2-pyrrolidon (NMP), N,N-Dimethylacetamid (DMAC), Aceton (ACT), 2-Propanol (IPA). Diese Dispergiermedien lassen sich allein oder in Mischungen untereinander einsetzen.

Erforderlichenfalls kann die Zusammensetzung auch weitere Hilfsstoffe oder Additive enthalten, wie insbesondere Dispergierhilfsmittel, Rheologiehilfsmittel oder Tenside. Vorzugsweise wird auf die Zugabe solcher Hilfsstoffe oder Additive verzichtet, damit die spätere Katalysatorschicht keine störenden, elektrokatalytisch inaktiven Fremdstoffe enthält. Enthalten sein müssen jedoch in vielen Fällen Leitfähigkeitsadditive, welche die elektrische Leitfähigkeit der späteren Schicht steigert oder sogar erst herstellt. Viele lonomere weisen nämlich lediglich eine ionische Leitfähigkeit auf, aber kaum eine Leitfähigkeit für Elektronen. Die typische Leitfähigkeitsadditive sind Ruße, insbesondere Spezialruße wie Ketjenblack^{®} von Nouryon oder Vulcan^{®} XC72 von Cabot Corporation.

Die wesentlichen Bestandteile der zu erzeugenden Katalysatorschicht sind der partikuläre Elektrokatalysator, das Polymer, welches diesen auf der Membran immobilisiert und Poren. Die Poren in der Schicht sind leer, werden im bestimmungsgemäßen Gebrauch der Anionenaustauschmembran aber mit flüssigem Elektrolyt gefüllt.

Elektrokatalysatoren sind Substanzen, die in elektrochemischen Reaktionen katalytisch wirken oder so aktivierbar sind, dass sie katalytisch wirken. Nach dem derzeitigen Forschungstand lassen sich die folgenden Elemente in Reinform, als Oxid, als Hydroxid oder als Oxidhydroxid in dem Prozess verarbeiten: Iridium (Ir), Nickel (Ni), Cobalt (Co), Chrom (Cr), Eisen (Fe), Ruthenium (Ru), Kuper (Cu), Molybdän (Mo), Zink (Zn), Blei (Pb), Mangan (Mn), Wolfram (W), Platin (Pt), Schwefel (S), Zinn (Sn), Gold (Au), Silber (Ag), Palladium (Pd), Rhenium (Re), Rhodium (Rh). Diese Elemente kommen in Reinform oder als Oxid oder als Hydroxid oder als Oxidhydroxid jeweils einzeln oder in Kombinationen als Elektrokatalysator in Betracht.

Ganz besonders bevorzugt wird eine Zusammensetzung verarbeitet, die als Elektrokatalysator Platin oder Platinlegierung geträgert auf Kohlenstoff (Pt/C) oder ein Nickel-Eisen-(Oxid)Hydroxid (NiFeₐO_{b}H_{c}) enthält. Die Indices a, b und c stehen für reelle Zahlen im Intervall von 0 bis 8. Die Indices a, b und c können gleich oder unterschiedlich sein. Das Nickel-Eisen-Verhältnis in dem Nickel-Eisen-(Oxid)Hydroxid sollte idealerweise im von Bereich 2:1 bis 10:1 liegen.

Wie bereits erwähnt hat das Polymer zumindest die Funktion eines Binders, welcher den Elektrokatalysator auf der Membran immobilisiert. Da die von der Anionenaustauschmembran transportierten Hydroxidionen mit den katalytisch aktiven Zentren des Elektrokatalysators in Kontakt kommen müssen, wird eine ionisch leitende Verbindung zwischen dem Elektrokatalysator und der Membran benötigt. Einfachstenfalls erfolgt diese über den Elektrolyt, welcher im Gebrauch in die Poren der Schicht eingefüllt wird. Zusätzlich kann der Zusammensetzung auch ionisch leitende Stoffe zugegebenen sein, die in dem Polymer eingeschlossen werden und diesem eine gewisse ionische Leitfähigkeit geben. Besser ist es jedoch, ein Polymer als Binder zu verwenden, welches eine intrinsische Leitfähigkeit für Hydroxidionen aufweist. Solche Anionen leitende Polymere werden auch lonomere genannt und werden hier bevorzugt als Binder eingesetzt. Die Verwendung von lonomeren eröffnet nämlich eine zusätzliche ionisch leitfähige Verbindung von der Membran zu den katalytisch aktiven Zentren durch das lonomer hindurch. Dies erlaubt eine Steigerung der Effizienz der Elektrolyse. Eine besonders bevorzugte Ausführungsform der Erfindung sieht demnach vor, dass die Zusammensetzung ein Polymer enthält, das Anionen leitend ist.

Einfachstenfalls werden kommerziell erhältliche Anionen leitende Polymere eingesetzt. Dabei handelt es sich meist um Polymere , die kationischen Gruppen besitzen. Diese Gruppen sind entweder aufgepfropft oder Teil des Backbones. Bei den kationischen Gruppen handelt es sich meist um quartäre Trialkyl-Ammoniumsalze. Als Backbone dienen meist Polystyrol, Polysulfon, Polyethersulfon, Polyarylether, Polybenzimidazole oder Polyphenylenoxid, oft in fluorierter Form.

Nachteilig an diesen lonomeren ist, dass sie meist Fluor enthalten und deswegen zunehmend Vorbehalten begegnen. Deswegen werden besser fluorfreie Anionen leitende Polymer eingesetzt.

Solche sind bekannt. Vorzugsweise werden solche fluorfreien lonomere eingesetzt, welche eine der folgenden drei Strukturen (I), (II), (III) aufweisen: 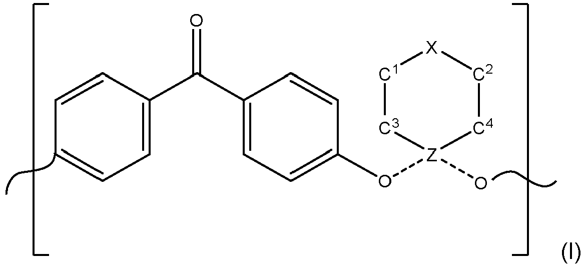
wobei in (I) X für ein Strukturelement steht, umfassend ein positiv geladenes Stickstoffatom, welches an C¹ und C² gebunden ist und das über zwei Bindungen an ein oder zwei Kohlenwasserstoffreste gebunden ist, umfassend 1 bis 12, vorzugsweise 1 bis 6, besonders bevorzugt 1 oder 5 Kohlenstoffatome
und wobei in (I) Z für ein Strukturelement steht, das ein Kohlenstoffatom umfasst, welches an C³ und C⁴ gebunden ist, und das mindestens einen aromatischen Sechsring umfasst, der direkt an eines der Sauerstoffatome gebunden ist, wobei die aromatischen Sechsringe durch ein oder mehrere Halogen- und/oder ein oder mehrere C₁- bis C₄-Alkylreste substituiert sein können; 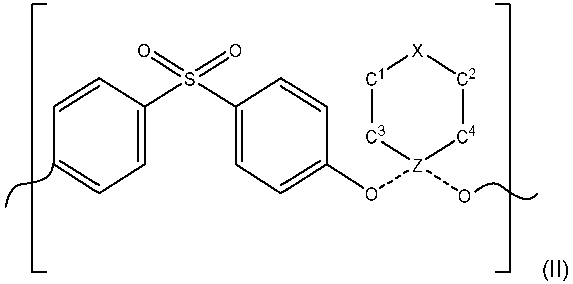
wobei in (II) X für ein Strukturelement steht, umfassend ein positiv geladenes Stickstoffatom, welches an C¹ und C² gebunden ist und das über zwei Bindungen an ein oder zwei Kohlenwasserstoffreste gebunden ist, umfassend 1 bis 12, vorzugsweise 1 bis 6, besonders bevorzugt 1 oder 5 Kohlenstoffatome,
und wobei in (II) Z für ein Strukturelement steht, das ein Kohlenstoffatom umfasst, welches an C³ und C⁴ gebunden ist, und das mindestens einen aromatischen Sechsring umfasst, der direkt an eines der Sauerstoffatome gebunden ist, wobei der aromatische Sechsring in den Positionen 3 und 5 mit derselben oder verschiedenen C₁- bis C₄-Alkylreste substituiert sein kann, insbesondere mit einer Methyl-, iso-Propyl- oder tert-Butyl-Gruppe, wobei die Methylgruppe bevorzugt ist; 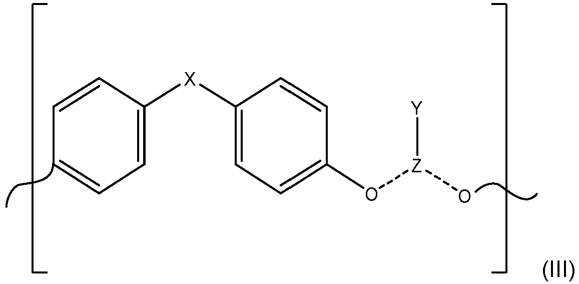
wobei in (III) X für eine Keton- oder Sulfon-Gruppe steht;
wobei in (III) Z für Strukturelement steht, welches mindestens ein tertiäres Kohlenstoffatom und mindestens einen aromatisches Sechsring umfasst, wobei der aromatische Sechsring mit einem der beiden Sauerstoffatome direkt verbunden ist;
und wobei in (III) Y für ein Strukturelement steht, welches mindesten ein Stickstoffatom mit positiver Ladung umfasst, wobei dieses Stickstoffatom mit dem Strukturelement Z verbunden ist.

Die fluorfreien lonomere mit den Strukturen (I), (II) und (III) sind sowohl für den Einsatz in der Anionenaustauschmembran geeignet, als auch für die Immobilisierung der Katalysators auf der Membran. Zudem lassen sich diese lonomere hervorragend mit dem erfindungsgemäßen Prozess verarbeiten, insbesondere bei geringen Temperaturen unter 70°C. Diese Polymere der Strukturen (I), (II) und (III) sollten zumindest in der Zusammensetzung enthalten sein. Bekannt sind diese lonomere aus den Patentanmeldungen EP3770201A1, EP4032934A1 bzw. EP4059988A1.

Das Substrat, auf das die Katalysatorschicht aufgetragen wird, muss aus einen Anionen leitenden Membranwerkstoff bestehen oder diesen zumindest enthalten, damit ein Austausch von OH- Ionen über die spätere Anionenaustauschmembran möglich ist. Sofern es sich bei dem Membranwerkstoff um ein organisches, polymeres Material handelt, ist der Membranwerkstoff als lonomer aufzufassen. Vorzugsweise wird dasselbe lonomer als Membranwerkstoff verwendet wie als Binder. Das ermöglicht eine besonders gute Anbindung des Elektrokatalysators an das Substrat und eine gute lonenleitung. Es kann aber auch vorteilhaft sein, dass als Binder und als Membranwerkstoff jeweils ein lonomer verwendet wird, welches zwar dieselbe Wiederholeinheit aufweist, sich aber hinsichtlich der Kettenlänge unterscheidet. Membranwerkstoff und Polymer sind dann nicht identisch aber chemisch sehr ähnlich. Dies ermöglicht etwa eine höhere Stabilität des Substrats. Gemäß einer bevorzugten Weiterbildung der Erfindung weisen daher der Membranwerkstoff und das Polymer dieselbe Wiederholeinheit auf.

Das lonomer, welches als Membranwerkstoff und/oder als (Binder-)Polymer verwendet wird, sollte eine spezifische Leitfähigkeit S für Hydroxidionen aufweisen, die vorzugsweise zwischen 50 mS/cm und 150 mS/cm liegt. Die oben beschriebenen, fluorfreien lonomere erreichen eine spezifische Leitfähigkeit von etwa 100 mS/cm. Die spezifische Leitfähigkeit von lonomeren liegt heutzutage allgemein zwischen 5 mS/cm und 300 mS/cm. Diese Leitfähigkeitsangaben beziehen sich auf Hydroxidionen (OH⁻). Häufig wird die spezifische Leitfähigkeit auch für Chloridionen (Cl⁻) angegeben. Die Werte für Chlorid legen dann etwa auf etwa 1/5 der Werte für Hydroxid.

Die Messung der spezifische Leitfähigkeit S für Hydroxidionen des lonomers geschieht folgendermaßen:
Eine Lösung des lonomers wird gleichmäßig auf eine Glasplatte mittels Rakel aufgetragen. Nach anschließender Trocknung für 3 Stunden bei 80 °C wird die Trockenschichtdicke bestimmt. Diese sollte in einem Bereich von 60 - 120 µm liegen und über die Fläche möglichst konstant sein. Die folienartige lonomerschicht wird von der Glasplatte durch Einlegen in 1 M KOH Lösung von der Glasplatte getrennt. Somit erhält man eine lonomerfolie.

Anschließend wird ein lonentauschvorgang vollzogen, idealerweise unter Ausschluss von COz durch Verwendung einer Glovebox und/oder dicht verschließbaren Boxen. Durch den Ausschluss von COz soll die Carbonatbildung von Kalilauge oder den OH- Ionen in der lonomerschicht verhindert werden. Für den lonentausch wird eine 1 M Kalilauge (Maßlösung von Carl Roth; K017.1) verwendet. Die für den lonenaustausch erforderliche Kontaktierung der lonomerfolie mit der Kalilauge erfolgt in dicht verschließbaren Boxen.

Die dicht verschließbaren Boxen werden in der Glovebox zunächst einmal mit der Kalilauge gewaschen und anschließend befüllt, sodass die lonomerfolie gut bedeckt ist. Die Boxen werden dicht verschlossen. Danach kommen die gefüllten, geschlossenen Boxen für 1 Stunde in ein 60 °C heißes Schüttelbad, welches mit Wasser gefüllt ist. Dieses steht außerhalb der Glovebox. Dies wird dreimal, mit jeweils frischer Kalilauge, wiederholt.

Nachdem die lonomerfolie dreimal für eine Stunde bei 60 °C lonengetauscht wurde, wird die sie nochmals mit frischer Kalilauge kontaktiert und für zwei Tage im Schüttelbad bei 60 °C geschüttelt. Zum Waschen der lonomerfolie wird Reinstwasser verwendet. Auch bei diesem Schritt finden alle Wascharbeiten in der Glovebox statt. Am Beginn dieses Schrittes wird die vorhandene Kalilauge aus den Boxen entfernt, hierfür wird die Box zweimal mit Reinstwasser gespült. Die Box wird mit frischem Reinstwasser gefüllt und für 20 min bei 60 °C im Schüttelbad gewaschen. Somit wurde die lonomerfolie in Hydroxidform übertragen und gewaschen.

Für die Leitfähigkeitsmessung wird aus der gewaschenen lonomerfolie (in Hydroxidform) mittels Stanzeisen rechteckige Stücke mit der Größe 25 mm x 15 mm gestanzt, welche im Folgenden als "Testionomerfolien" bezeichnet werden.

Jeweils eine Testionomerfolie wird in eine Leitfähigkeitsmesszelle eingebaut, mit welcher die lonenleitfähigkeit innerhalb der Ebene der Folie gemessen werden kann. Dies geschieht während die Membran mit deionisierten Wasser umspült wird. Aus der Messgeometrie (Abstand bzw. Fläche der Elektroden, Foliendicke und Folienbreite) lässt sich die intrinsische Leitfähigkeit der Folie errechnen, welche gleich der Leitfähigkeit des lonomers ist.

Die Messzelle und die Messprozedur (in diesem Fall für eine Nation^{®} 117 - Membran) wird beschrieben von Maria Jesus Gonzälez-Pabön et al. im Abschnitt "2.6 Conductivity determination" des Preprints von
High-performance biodegradable membrane for point of need paper-based micro-scale microbial fuel cell analytical devices. bioRxiv 351890; doi: https://doi.org/10.1101/351890

Hier findet sich auch die Vorschrift zur Berechnung der Leitfähigkeit der Folie aus der Messgeometrie.

Als Substrat wird in der Regel eine flache Folie, Platte oder Ronde genutzt, die aus einem Anionen leitenden Membranwerkstoff besteht oder diesen zumindest enthält. Das Substrat sollte nicht porös, sondern geschlossen sein, damit kein Gasaustausch über die Membran möglich ist. Einzig die Schicht soll porös sein. Die Dicke des Substrats sollte etwa 15 µm bis 110 µm betragen. Die Länge und Breite des Substrats wird durch die Zellfläche bestimmt. In der Regel werden bandförmige, endlose Folien aus einem lonomer als Substrat genutzt und abschnittsweise oder durchgängig beschichtet. Falls bandförmig (als Rolle-zu-Rolle-Prozess) beschichtet wird, wird die fertige Anionenaustauschmembran oder ihre Vorstufe von der Rolle abgeschnitten.

Wie bereits erwähnt, lässt sich die erfindungsgemäße Herstellung der katalytisch beschichteten Anionenaustauschmembran grob in zwei Abschnitte unterteilen nämlich einen ersten zur Herstellung einer Vorstufe und einen zweiten zur Formierung der Vorstufe, wodurch die katalytisch beschichtete Anionenaustauschmembran in ihrer betriebsbereiten Form erhalten wird.

Die Verfahrensschritte
f) Beaufschlagen der Schicht mit der wässrigen alkalischen Lösung;
g) Umsetzen zumindest eines Teils des anorganische Materials mit dem Alkalimetall zu einem Produkt innerhalb der Schicht;
h) Auswaschen zumindest eines Teils des Produkts aus der Schicht;
i) Erhalt einer katalytisch beschichteten Anionenaustauschmembran, umfassend das Substrat und darauf aufgebracht die Schicht, wobei die Schicht nunmehr offene Poren aufweist;

beziehen sich dabei auf den zweiten Verfahrensabschnitt, nämlich die Formierung der Vorstufe.

Gemäß einer bevorzugten Prozessvariante wird dieser Verfahrensabschnitt innerhalb einer elektrochemischen Zelle ausgeführt. Das bedeutet, dass die Vorstufe in die elektrochemische Zelle eingebaut wird und die Formierung in situ - also am finalen Bestimmungort der katalytisch beschichteten Anionenaustauschmembran, nämlich innerhalb der Zelle - erfolgt. Möglich ist in situ Formierung insbesondere dann, wenn die elektrochemische Zelle ohnehin für den Betrieb im basischen Milieu bestimmt ist, wie etwa für die alkalische Membranwasserelektrolyse. Dann sind die Bauelemente der Zelle nämlich gegen alkalische Medien beständig, sodass die Laugung der Schicht die Zelle nicht beschädigt. Als wässrige alkalische Lösung wird einfachstenfalls der ohnehin für den Betrieb der elektrochemischen Zelle benötigte, alkalische Elektrolyt genutzt. Da sich durch die Umsetzung des anorganischen Materials und das Auswaschen des dadurch entstandenen Produktes der Elektrolyt degeneriert und verunreinigt wird, wird es in der Regel erforderlich sein, den Elektrolyt nach Abschluss der Formierung zu tauschen.

Insbesondere dann, wenn die katalytisch beschichtete Anionenaustauschmembran nicht für den Gebrauch im alkalischen Milieu bestimmt ist, sollte die Laugung nicht in der Zelle erfolgen, um diese nicht zu beschädigen. Folglich sieht eine zweite Verfahrensvariante es vor, dass die Schritte
f) Beaufschlagen der Schicht mit der wässrigen alkalischen Lösung;
g) Umsetzen zumindest eines Teils des anorganische Materials mit dem Alkalimetall zu einem Produkt innerhalb der Schicht;
h) Auswaschen zumindest eines Teils des Produkts aus der Schicht;
i) Erhalt einer katalytisch beschichteten Anionenaustauschmembran, umfassend das Substrat und darauf aufgebracht die Schicht, wobei die Schicht nunmehr offene Poren aufweist;
außerhalb einer elektrochemischen Zelle (ex situ) ausgeführt werden. Die Formierung erfolgt dann unmittelbar nach der Herstellung des Vorprodukts, vorzugsweise direkt in einem integrierten Rolle-zu-Rolle-Prozess, sodass die katalytisch beschichteten Anionenaustauschmembran in ihrer finalen, porösen Form aufgerollt wird. In der von der Membranherstellung separaten Zellfertigung wird die formierte Membran wieder abgerollt, konfektioniert und assembliert.

Neben den beiden hier beschriebenen Varianten der Formierung sind natürlich auch Mischformen denkbar, bei denen die Formierung ex situ begonnen und in situ finalisiert wird. Entsprechend wird nur ein Teil der Schritte f) bis i) an dem einen bzw. anderen Ort durchgeführt oder die Schritte werden an dem einen Ort nicht vollständig ausgeführt und erst am anderen abgeschlossen.

Sowohl bei der in situ als auch bei der ex situ-Variante ist es möglich die Schritte
f) Beaufschlagen der Schicht mit der wässrigen alkalischen Lösung;
g) Umsetzen zumindest eines Teils des anorganische Materials mit dem Alkalimetall zu einem Produkt innerhalb der Schicht;
h) Auswaschen zumindest eines Teils des Produkts aus der Schicht;
zumindest teilweise zeitgleich auszuführen, etwa in einem Fließprozess. Somit wird bereits mit dem Auswaschen begonnen, währenddessen die Umsetzung noch läuft. Dies kann die Umsetzungsgeschwindigkeit erhöhen, weil die Produkte der Umsetzung aus der Reaktion entfernt werden. Vorzugsweise finden alle drei Schritte gleichzeitig statt.

Die katalytisch beschichtete Anionenaustauschmembran, die durch das Verfahren hergestellt werden kann, ist ein weiterer Gegenstand der Erfindung. Sie umfasst das Substrat, welches den Anionen leitenden Membranwerkstoff enthält bzw. daraus besteht und mindestens die auf dem Substrat aufgebrachte Schicht, wobei in der Schicht der partikuläre Elektrokatalysator angereichert ist, wobei der Elektrokatalysator über das Polymer auf dem Substrat immobilisiert ist, und wobei die Schicht offene Poren aufweist. Die Dicke der Schicht beträgt vorzugsweise etwa 3 µm bis 15 µm. Die Gesamtdicke der Anionenaustauschmembran liegt vorzugsweise zwischen 15, µm und 120 µm.

Ein weiterer Erfindungsgegenstand ist die Vorstufe der katalytisch beschichteten Anionenaustauschmembran. Auch die Vorstufe das Substrat, welches den Anionen leitenden Membranwerkstoff enthält bzw. daraus besteht und mindestens die auf dem Substrat aufgebrachte Schicht, wobei in der Schicht der partikulärer Elektrokatalysator und das davon verschiedene, partikuläre anorganisches Material angereichert sind, und wobei der Elektrokatalysator und das anorganische Material über ein Polymer auf dem Substrat immobilisiert sind.

Die Vorstufe unterscheidet von der finalen katalytisch beschichtete Anionenaustauschmembran zunächst dadurch, dass sie weitestgehend porenfrei ist.

Darüber hinaus unterscheiden sich die Vorstufe und die fertig formierte CCM durch die stoffliche Zusammensetzung der Schicht. Die Vorstufe enthält in einem höheren Maße das partikuläre anorganische Material, währenddessen die fertig formierte CCM allenfalls noch nicht umgesetzte Reste davon enthält sowie ggf. nicht ausgewaschene Reste des Produktes, in welches das anorganische Material im Zuge der Laugung umgesetzt worden ist.

Für den Fall, dass es sich bei dem partikulären anorganischen Material um Siliciumdioxid und/oder Aluminiumoxid und bei der Lauge um Kaliumhydroxid bzw. Natriumhydroxid handelt, sind die bevorzugten Gehalte bzw. zu erwartenden Restgehalte dieser Stoffe bzw. deren Reaktionsprodukte in Tabelle 1 niedergelegt:

**Tabelle 1: bevorzugte Gehalte an Silica, Alumina, Silicat und Aluminat**

| | vor der Laugung (Vorstufe) | | nach der Formierung (finale CCM) | |
|---|---|---|---|---|
| | minimal | maximal | minimal | maximal |
| SiO₂ + Al₂O₃ | 10 % | 60 % | 0.2 % | 25 % |
| K₂SiO₃ + NaAl(OH)₄ | 0 | 6% | 0.1 % | 4% |

Alle in Tabelle 1 angegebenen Werte verstehen sich als Gew.-% in Bezug auf die Gesamtmasse der Schicht. Die Werte beziehen sich auf die Summe der einzelnen Gewichtsanteile der in der Zeile genannten Substanzen. Für den Fall, dass eine Substanz nicht in der Schicht enthalten ist, entspricht die Summe dem Gewichtsanteil der enthaltenen Substanz.

Der höhere Gehalt an Silicat vor der Laugung von bis zur 6% erklärt sich dadurch, dass einige lonomere reaktive OH-Gruppen aufweisen, welche bereits vor der Kontaktierung mit der alkalischen Lösung beginnen, das Silica in Silicat umzusetzen. Hinsichtlich der Umsetzung von Alumina zu Aluminat gilt Entsprechendes, weil die Umsetzung in Gegenwart von Wasser erfolgt, welches sich als Produktionsrückstand in der Membran befindet oder aus der Luftfeuchtigkeit kommt.

### Beispiele

Die Erfindung soll nun anhand von Beispielen näher erläutert werden. Hierfür zeigen:
- Figur 1:: Auftragen der Zusammensetzung auf das Substrat;
- Figur 2:: Substrat mit Auftrag;
- Figur 3:: Abreichern des Lösemittels aus dem Auftrag;
- Figur 4:: Vorstufe;
- Figur 5:: Beaufschlagen der Schicht mit der wässrigen alkalischen Lösung;
- Figur 6:: Auswaschen zumindest eines Teils des Alkalisilicats aus der Schicht;
- Figur 7:: Anionenaustauschmembran mit poröser Beschichtung;
- Figur 8:: EDX-Spektrum der mit Silica hergestellten Vorstufe der CCM vor der Laugung;
- Figur 9:: EDX-Spektrum der mit Silica hergestellten CCM nach der Laugung;
- Figur 10:: Elektrolysemessung einer erfindungsgemäß hergestellten CCM (runde Symbole, durchgezogene Linie) im Vergleich zu einer konventionellen CCM (viereckige Symbole, gepunktete Linie).

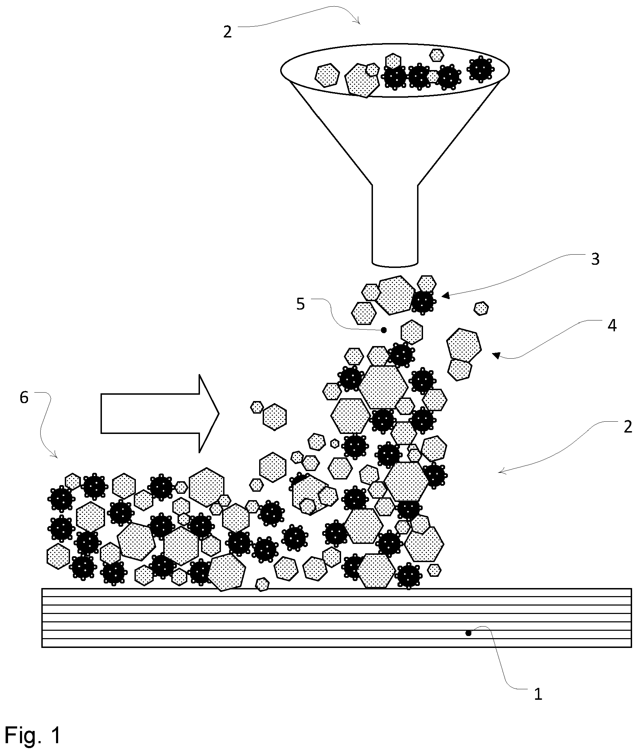

Das Verfahren zur Herstellung der katalytisch beschichteten Anionenaustauschmembran ist schematisch in den Figuren 1 bis 7 dargestellt.

Zunächst wird ein Substrat 1 bereitgestellt. Das Substrat 1 enthält einen Membranwerkstoff, der eine gewisse Leitfähigkeit für Anionen aufweist. Als Membranwerkstoff kommen insbesondere Anionen leitende Polymere, so genannte lonomere in Betracht. Bei dem Substrat 1 handelt es sich in der Regel um eine flache Anionenaustauschmembran (AEM) in Gestalt einer Folie, die aus dem Membranwerkstoff besteht. Es können aber auch Verbundmaterialen als Substrat 1 eingesetzt werden, die neben dem Membranwerkstoff auch ein Verstärkungsmaterial enthalten. In der Regel weist das Substrat 1 selbst keine eigene katalytische Aktivität auf. Gleichwohl kann das Substrat 1 mit einer Beschichtung versehen sein, die eine andere Funktion erfüllt als Katalyse, etwa Schutz des Membranwerkstoffes. Eine solche optionale Beschichtung ist in den Figuren nicht dargestellt.

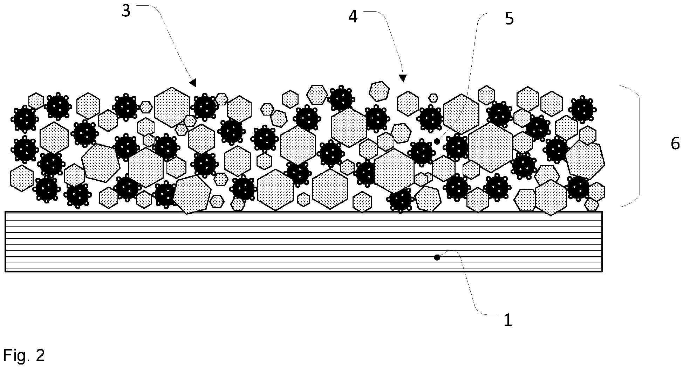

Des Weiteren wird eine Zusammensetzung 2 bereit gestellt, welche im Wesentlichen die folgenden Komponenten umfasst: einen festen partikulären Elektrokatalysator 3, festes partikuläres Siliciumdioxid 4, eine flüssige Lösung 5, die ein Lösemittel und ein in dem Lösemittel gelöstes Polymer (Die Lösung 5 ist in den Figuren 1 und 2 als klare Flüssigkeit dargestellt). Die Zusammensetzung 2 kann optional noch weitere Komponenten enthalten, wie etwa ein Dispergiermedium oder Dispergierhilfsmittel. Aufgrund ihrer festen und gelösten Bestandteile hat die Zusammensetzung 2 die Form einer Suspension. Abhängig von der Rezeptur und der Verarbeitungstemperatur kann die Zusammensetzung 2 eher niedrig viskos oder hochviskos ausfallen. Abgesehen von dem enthaltenen Siliciumdioxid 4 entspricht die Zusammensetzung 2 herkömmlichen Katalysatortinten oder Katalysatorpasten, wie sie zur katalytisch aktiven Beschichtung von Membranen (CCM) oder Elektroden (CCS) genutzt werden.

Die Zusammensetzung 2 wird auf das Substrat 1 aufgetragen. Dies geschieht in herkömmlicher Weise durch direkte Beschichtung mit einer Rakel oder mit einer Schlitzdüse, durch Besprühen, durch Siebdruck oder indirekt über ein Transfermedium (ein so gennanntes Decal). Da das Auftragen dem Stand der Technik entspricht, ist dieser Vorgang in Figur 1 sehr vereinfacht dargestellt.

Durch das Auftragen der Zusammensetzung 2 auf das Substrat 1 erhält das Substrat 1 einen schichtartigen Auftrag 6 (Figur 2). Die Schichtstärken von Auftrag 2 und Substrat 1 sind in Figur 2 nicht maßstäblich dargestellt: In einer technischen Anwendung beträgt die Stärke des Substrats 1 etwa 50 µm bis 70 µm, währenddessen der Auftrag 6 mit etwa 10 µm bis 20 µm sehr dünn ist. In dem Auftrag 6 ist immer noch die transparente Lösung 5 enthalten.

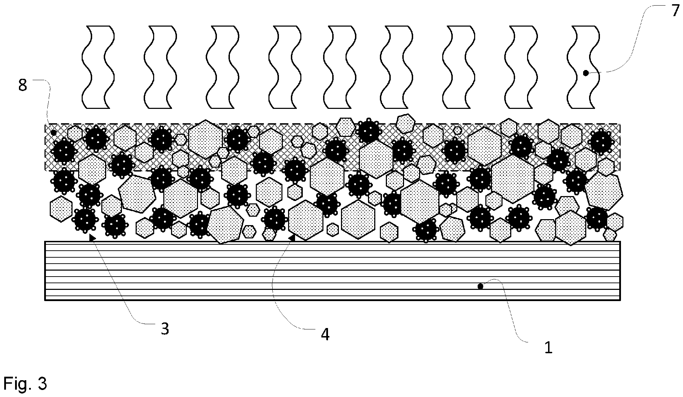

In einem nächsten Schritt wird das in der Lösung 5 enthaltene Lösemittel 7 aus dem Auftrag 6 abgereichert. Dies geschieht einfachstenfalls durch Trocknung. Figur 3 zeigt schematisch, wie das Lösemittel 7 aus dem Auftrag 6 abdampft. Durch das Abziehen des Lösemittels 7 fällt das zuvor in der Lösung gelöste Polymer 8 aus und bildet eine feste Matrix, welche die partikulären Materialien 3, 4 umschließt. Die Oberfläche der Matrix ist in der Praxis nicht so scharf umrissen wie in den Figuren 3 bis 7 vereinfachend dargestellt. Vielmehr legt sich das Polymer 8 auf bzw. um die einzelnen Partikeln 3, 4 ab, überspannt die Zwischenräume und bildet somit eine unregelmäßige, nicht planare Oberfläche.

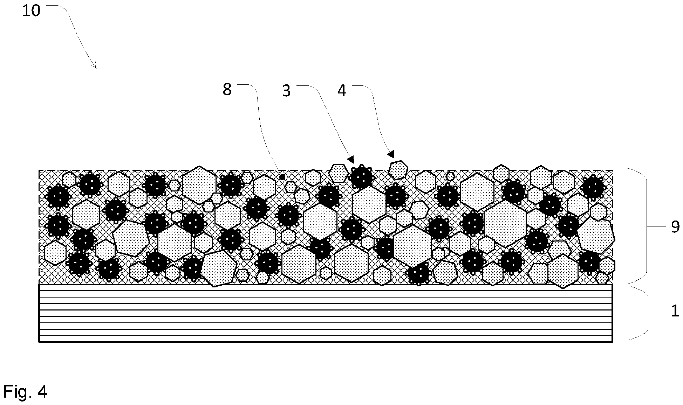

Wenn der Trocknungsvorgang abschlossen ist, erstreckt sich die Matrix aus Polymer 8 über die gesamte Stärke des Auftrags 6 bis zum Substrat 1 herab (Figur 4). Auf diese Weise erhält das Substrat 1 eine feste Schicht 9, die aus Polymer 8, Elektrokatalysator 3 und Siliciumdioxid 4 gebildet wird. Da das Polymer 8 auch auf dem Substrat 1 haftet, sind Elektrokatalysator 3 und Siliciumdioxid 4 über das Polymer 8 auf dem Substrat immobilisiert. In diesen Verfahrensstadium ist eine Vorstufe10 erhalten, nämlich das Substrat 1 fest beschichtet mit der Schicht 9 enthaltend Polymer 8, Elektrokatalysator 3 und Siliciumdioxid 4. Die Vorstufe 10 kann freilich bereits als katalytisch aktiv beschichtete Anionenaustauschmembran (CCM) eingesetzt werden, es ist aber verglichen mit dem späteren Endprodukt nicht so effektiv, weil die Schicht 9 nicht porös ist und zudem elektrochemisch inertes Siliciumdioxid 4 enthält.

Die Überführung der Vorstufe 10 in das Endprodukt erfolgt in einem zweiten Abschnitt des Verfahrens, der Formierung.

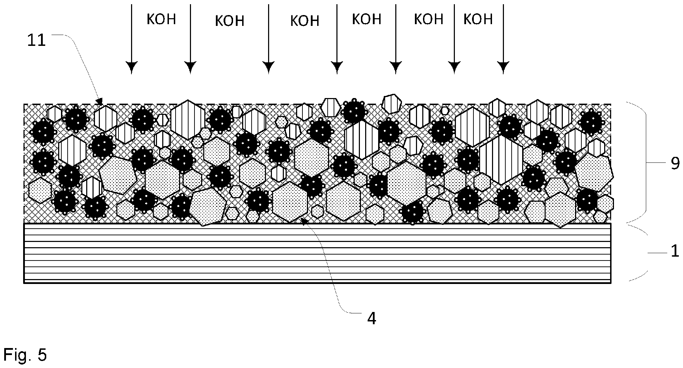

Dafür wird die Schicht 9 der Vorstufe 10 zunächst mit einer wässrigen alkalischen Lösung beaufschlagt, wie etwa mit Kaliumhydroxid (Kalilauge - KOH). Das in Figur 5 lediglich schematisch dargestellte Beaufschlagen kann einfachstenfalls durch Auftragen der Kalilauge auf die Schicht 9 mit einem Pinsel oder durch Eintauchen in ein Bad aus Kalilauge KOH erfolgen.

Das in der alkalischen Lösung enthaltene Hydroxid reagiert mit dem in der Schicht 9 befindlichen partikulären Siliciumdioxid 4 zu dem entsprechenden Alkalisilicat. Im Falle der hier verwendeten Kalilauge KOH entsteht nach Gleichung (1) Kaliumsilicat 11 und flüssiges Wasser HzO.

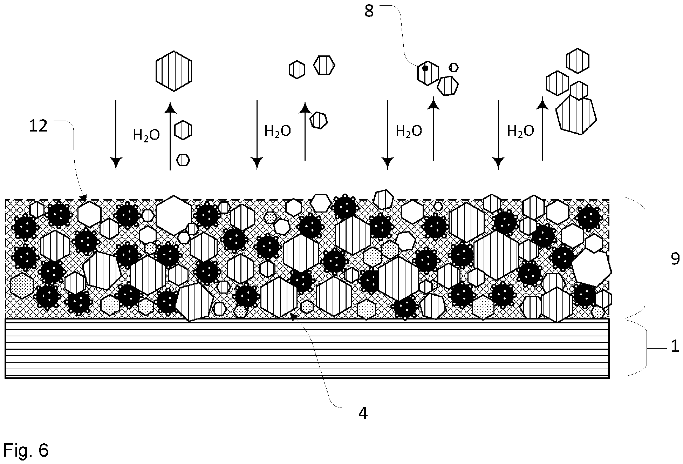

Da Kaliumsilicat 11 wasserlöslich ist, lässt es sich mit Wasser H₂O oder einer wässrigen Waschlösung aus der Schicht 9 auswaschen; vgl. Figur 6. An den Stellen, an denen sich vorher die Siliciumdioxid- bzw. Kaliumsilicatpartikel befanden, bleiben Poren 12 in der Matrix aus Polymer 8 zurück. Die Schicht 9 wird dadurch porös.

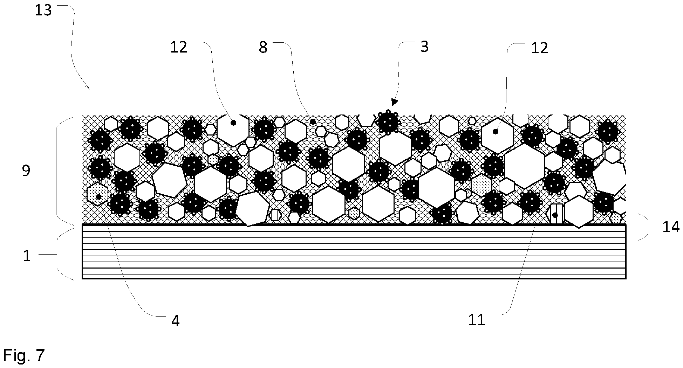

Das Herstellverfahren ist mit der nun erfolgten Formierung abgeschlossen. Figur 7 zeigt schematisch das erhaltene Endprodukt 13, eine Anionenaustauschmembran umfassend das Substrat 1 und die darauf aufgebachte Schicht 9 enthaltend den partikulären Elektrokatalysator 3 sowie die Matrix aus Polymer 8, die nunmehr Poren 12 enthält. Darüber hinaus enthält die Schicht 9 des Endprodukts 13 auch vereinzelt nicht umgesetztes Siliciumdioxid 4 und nicht ausgewaschenes Kaliumsilikat 11, da sowohl das Umsetzen als auch das Auswaschen nicht perfekt zu 100% erfolgt, insbesondere im Grenzbereich 14 zwischen Schicht 9 und Substrat 1.

Der Grenzbereich 14 verläuft in der Praxis nicht scharf zwischen Schicht 9 und Substrat 1. Vielmehr handelt es sich um eine Übergangszone in der die Konzentration des Elektrokatalysators 3 und der Poren 12 in Richtung des Substrats 1 abnehmen, währenddessen die Konzentration des Membranwerkstoffes in diese Richtung zunimmt. Dies ist insbesondere dann der Fall, wenn es sich bei dem Polymer 8 und dem Membranwerkstoff um dasselbe Anionen leitende Material (lonomer) handelt oder wenn beide Materialien zumindest dieselbe Wiederholeinheit aufweisen. In dem Fall löst das in der Zusammensetzung 2 enthaltene Lösemittel nämlich auch den Membranwerkstoff an, sodass die Katalysatorpartikel 3, welche sich zuunterst in dem Auftrag 6 befinden, teilweise in das angelöste Substrat 1 eindringen. Zugleich wird auf diese Weise ein guter, Ionen leitender Kontakt zwischen der Matrix und dem Substrat 1 geschaffen, sodass die Hydroxid-Ionen aus dem Substrat 1 über das Polymer 8 direkt zu den katalytisch aktiven Zentren des Elektrokatalysators 3 geleitet werden. Die dort entstehenden Gase können durch die Poren 12 aus der Schicht 9 entweichen. Zu beachten ist in diesem Zusammenhang, dass das Substrat 1 nicht vollständig aufgelöst wird, weil es dadurch im Ergebnis selbst porös und damit undicht wird. Das Substrat 1 sollte weiterhin geschlossen gasdicht sein, damit kein Gasaustausch über die Membran möglich ist,

Das in Figur 7 dargestellte Endprodukt 13 weist nur eine katalytisch aktive Schicht 9 auf einer Seite des Substrats 1 auf. In der Praxis ergibt es Sinn, das Substrat 1 beidseitig zu beschichten, nämlich auf der ersten Seite mit einem ersten Elektrokatalysator, der die Anodenreaktion katalysiert und auf der zweiten, gegenüberliegenden Seite des Substrats 1 mit einem zweiten Elektrokatalysator, welcher die Kathodenreaktion katalysiert. Dies ist in Figur 7 nicht dargestellt.

### Experimentelle Daten

Im Folgenden wird der Prozess zur Herstellung einer porösen Katalysatorschicht für AEM-Anwendungen anhand des Beispiels einer Platin/Kohlenstoff-basierten Katalysatorschicht beschrieben. Damit werden die mit der Erfindung erzielten Effekte experimentell belegt.

### 1. Herstellung eines lonomers (nicht Teil der Erfindung)

Ein Anionen leitendes, kationisches Polymer wurde entsprechend Beispiel 3 der EP3770201A1 synthetisiert.

### 2. Herstellung einer Anionenaustauschmembran (nicht Teil der Erfindung)

Sodann wurde aus dem in 1. synthetisierten, kationischen Polymer eine Anionen leitende Membran hergestellt, wie in Beispiel 4 der EP3770201A1 beschrieben.

### 3. Bereitstellen einer Zusammensetzung ohne Silica (Referenzversuch, nicht Teil der Erfindung)

Ein Schraubdeckelglas wurde bis zu einem Drittel mit Yttrium-stabilisierten Zirkonoxid Mahlkugeln (Durchmesser 5 mm) gefüllt. Anschließend wurden zwei Gewichtsteile Katalysatorpulver (Platin auf Kohlenstoff 50% Platinbeladung) in das Gefäß eingefüllt. Danach wurden dazu 19 Gewichtsteile Wasser hinzugefügt, das Deckelglas verschlossen und für eine Minute mittels Vortex-Schüttler (Modell "lab dancer", IKA) geschüttelt. Das Gefäß wurde wieder geöffnet, 19 Gewichtsteile Ethanol hinzugefügt, wieder verschlossen und erneut eine Minute geschüttelt. Anschließend wurde das Gefäß abwechseln für mindestens fünf Stunden bei 60 U/min auf einen Kipp-/Rollmischer und für fünf Minuten in ein Ultraschallbad (180 W) gelegt. Dies wurde zweimal wiederholt. Es wurden jeweils 76 Teile Wasser und 76 Teile Ethanol hinzugefügt und eine Minute mittels Vortex-Schüttler geschüttelt. Zuletzt wurde eine lonomerlösung (5% lonomer in DMSO; wie in 1. hergestellt) hinzugefügt, bis der Feststoffanteil des lonomers 14% des Gesamtfeststoffanteils ausmachte, das Gefäß verschlossen, die Lösung für eine Stunde auf dem Kipp-/Rollmischer gerollt und schließlich für fünf Minuten im Ultraschallbad bei 180 W gelegt.

### 4. Bereitstellen einer Zusammensetzung mit Silica (Teil der Erfindung)

Die Herstellung mittels Silica erfolgte weitgehend analog zu der oben unter 3. beschriebenen Herstellung der Referenz-Zusammensetzung, jedoch wurde bei der letzten Zugabe von Wasser und Ethanol zusätzlich das Silica hinzugegeben:
Das Schraubdeckelglas wurde bis zu einem Drittel mit Yttrium stabilisierte Zirkonoxid Mahlkugeln (Durchmesser 5 mm) gefüllt. Anschließend wurden zwei Gewichtsteile Katalysatorpulver (Platin auf Kohlenstoff 50% Platinbeladung) in das Gefäß eingefüllt. Danach wurden dazu 19 Gewichtsteile Wasser hinzugefügt, das Deckelglas verschlossen und für eine Minute mittels Vortex-Schüttler (Modell "lab dancer", IKA) geschüttelt. Das Gefäß wurde wieder geöffnet, 19 Gewichtsteile Ethanol hinzugefügt, wieder verschlossen und erneut eine Minute geschüttelt. Anschließend wurde das Gefäß abwechselnd für mindestens fünf Stunden bei 60 U/min auf einen Kipp-/Rollmischer und für fünf Minuten in ein Ultraschallbad (180 W) gelegt. Dies wurde zweimal wiederholt. Es wurden 0.6 Gewichtsteile Silica sowie jeweils 76 Teile Wasser und 76 Teile Ethanol hinzugefügt und 1 Minute mittels Vortex-Schüttler geschüttelt. Die Zugabe des Silica erfolgte in Form einer Silica mit einer BET-Oberfläche von 300 m²/g (AEROSIL^{®} 300), in Dispersion in Wasser mit 10% Feststoffanteil. Die Wassermenge in der Dispersion wurde bei der Gesamtmenge des hinzugegebenen Wassers berücksichtigt.

Zuletzt wurde lonomerlösung (5% lonomer gemäß 1. hergestellt, gelöst in DMSO) hinzugefügt bis der Feststoffanteil des lonomers 14% des Gesamtfeststoffanteils ausmachte, das Gefäß verschlossen, die Lösung für eine Stunde auf dem Kipp-/Rollmischer gerollt und schließlich für fünf Minuten im Ultraschallbad bei 180 W gelegt.

### 5. Beschichtung eines Substrats mit der Zusammensetzung ohne Silica (nicht erfinderisch)

Für den Referenzversuch (ohne Silica) wurde die unter 3. bereitgestellte Zusammensetzung mittels Sprühbeschichter auf ein Substrat aufgetragen. Bei dem Substrat handelte es sich um die in 2. bereitgestellte, Anionen leitende Membran. Während der Beschichtung wurde die Membran auf einer beheizten (60 °C) Oberfläche fixiert.

Die Beschichtungsparameter wurden angepasst, um mit etwa 90 Schichten eine homogene Platinflächenbeladung von 0.45 mg_{Pt} / cm² zu erreichen. Es wurde darauf geachtet, dass jede einzelne Schicht weitgehend getrocknet war, bevor die jeweils nächste Schicht aufgetragen wurde. Zuletzt wurde die beschichtete Membran für 30 Minuten auf der beheizten Oberfläche final getrocknet.

Auf diese Weise wurde eine CCM erhalten. Sie lässt sich bereits wie eine herkömmliche CCM ohne Silica in der alkalischen Wasserelektrolyse einsetzen.

### 6. Beschichtung eines Substrats mit der Zusammensetzung mit Silica (Teil der Erfindung)

Für den erfinderischen Versuch mit Silica wurde die unter 4. bereitgestellte Zusammensetzung mittels Sprühbeschichter auf ein Substrat aufgetragen. Bei dem Substrat handelte es sich um die in 2. bereitgestellte, Anionen leitende Membran. Während der Beschichtung wurde die Membran auf einer auf 60°C beheizten Oberfläche fixiert.

Die Beschichtungsparameter wurden angepasst, um mit etwa 90 Schichten eine homogene Platinflächenbeladung von 0.45 mg_{Pt} / cm² zu erreichen. Es wurde darauf geachtet, dass jede einzelne Schicht weitgehend getrocknet war, bevor die jeweils nächste Schicht aufgetragen wurde. Zuletzt wurde die beschichtete Membran für 30 Minuten auf der beheizten Oberfläche final getrocknet.

Auf diese Weise wurde eine CCM erhalten. Bei der CCM handelt es sich um eine Vorstufe der finalen katalytisch beschichteten Anionenaustauschmembran. Sie lässt sich aber schon in diesem Zustand als CCM in der alkalischen Wasserelektrolyse einsetzen.

### 7. Formierungs-/Laugungsprozess

Um die in 5. und 6. erhaltenen CCMs in ihre Hydroxidform zu transferieren, wurden beide Proben für drei Stunden in 1 M KOH bei Raumtemperatur eingelegt. Gleichzeitig zum lonenaustausch innerhalb der Membrane konnte sich das in der Beschichtung befindliche Silica (bei Vorstufe aus 6.) weitgehend in wasserlösliches Kaliumsilikat umwandeln und teils herauslösen. Auf diese Weise wurde jeweils eine katalytisch beschichtete Anionenaustauschmembran (CCM) erhalten.

### 8. Energiedispersive Röntgen Analyse der beschichteten Membrane

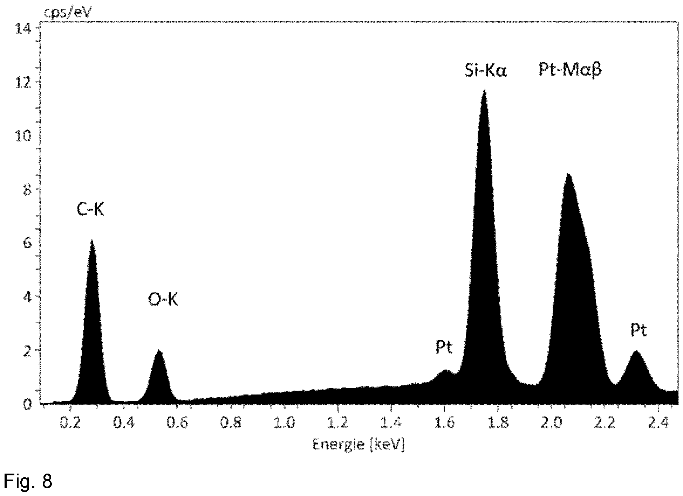

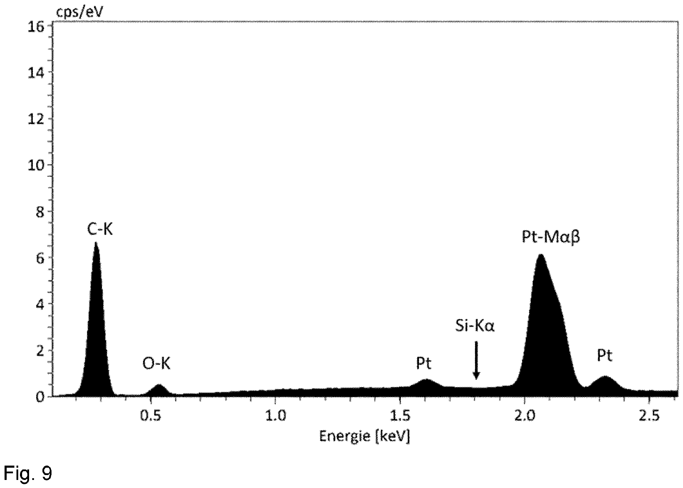

Um den Laugungsprozess zu verstehen wurde die in 6. mit Silica hergestellte CCM vor der in 7. beschriebenen Laugung sowie danach mittels Energiedispersive Röntgen Analyse (EDX) untersucht. Das Spektrum vor der Laugung ist in Figur 8 gezeigt; Figur 9 zweigt das Spektrum nach der Laugung. Beim Vergleich beider Spektren ist eine deutliche Verringerung der Größe des Peaks bei ungefähr 1,7 keV ersichtlich, wohingegen die anderen Peaks sich weniger stark verändern. Der genannte Peak ist, wie in den Figuren gekennzeichnet, dem Siliziumoxid (Si-Kα) zuzuordnen. Die Verringerung der Größe des Peaks zeigt, dass in der CCM nach der Laugung die Menge des Silicas deutlich abnimmt.

### 9. Testung einer katalysatorbeschichteten Membran in einer Elektrolysetestzelle

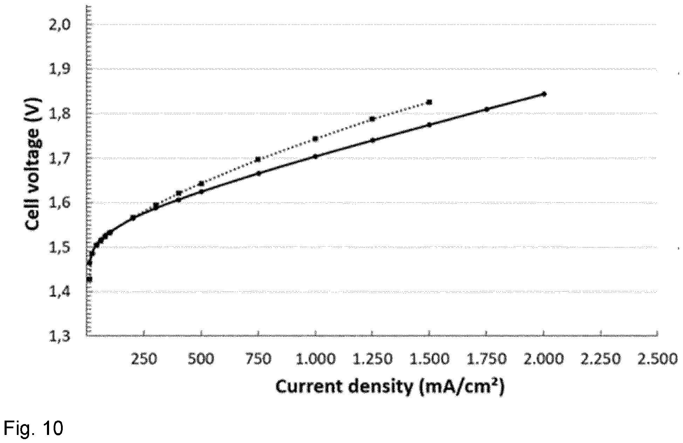

Die beschichtete und gelaugte Membran mit aktiver Pt/C Katalysatorbeschichteter Fläche von 16 cm² wurde in eine Elektrolysetestzelle (BalticFuelCells GmbH, Germany) getestet. Hierbei diente die Katalysatorschicht als Kathodenkatalysator. Anodenseitig wurde eine formstabile poröse Edelstahlelektrode verwendet. Die Messzelle wurde während der Elektrolyseversuche auf 60 °C temperiert und anoden- sowie kathodenseitig mit 1 M KOH Lösung durchspült. Die charakteristische Strom-Spannungskennlinie ist in Figur 10 (runde Symbole, durchgezogene Linie) aufgezeichnet.

Unter den gleichen Bedingungen wurde auch die wie in 5. beschriebene, herkömmliche hergestellte CCM getestet. Die zugehörige Strom-Spannungskennlinie ist mit viereckigen Symbolen und gepunkteter Linie in Figur 10 ebenfalls abgebildet.

Bei den Graphen wurde die benötigte Spannung gegen die extern angelegten Stromstärke aufgetragen. Bei einer konstanten Stromstärke (z.B. 1500 mA/cm²) ist eine niedrige Spannung zu bevorzugen, da hierbei die benötigte elektrische Energie zur Produktion der gleichen Menge Wasserstoff, bei gleicher Herstellungsrate, sinkt und dadurch die Effizienz ansteigt. Besonders relevant für industrielle Anwendung sind die Stromstärken über 500 mA /cm². Es ist zu erkennen, dass die Strom-Spannungskennlinie bei den höheren Stromdichten bei der erfinderisch hergestellten CCM niedriger ist als die der zur Referenz hergestellten (nicht erfinderischen) CCM. Die geringere Stromdichte resultiert bei gleicher Spannung in einer geringeren Leistungsaufnahme, sodass der spezifische Energiebedarf der erfindungsgemäß hergestellten CCM geringer ist.

### 10. Fazit

Aus dem Vergleich der Strom-Spannungskennlinien der Figuren 10 ist ersichtlich, dass die erfindungsgemäß mittels Silica und anschließender Laugung hergestellte CCM in einer alkalischen Wasserspaltung eine höhere Effizienz erzielt als die herkömmlich hergestellte CCM. Die höhere Effizienz kann dadurch erklärt werden, dass die Laugung der Schicht eine Porosität verleiht, die wiederum die Zugänglichkeit der katalytisch aktiven Zentren verbessert.

### Bezugszeichenliste

- 1: Substrat
- 2: Zusammensetzung
- 3: Elektrokatalysator
- 4: Siliciumdioxid
- 5: Lösung
- 6: Auftrag
- 7: Lösemittel
- 8: Polymer
- 9: Schicht
- 10: Vorstufe
- 11: Kaliumsilicat
- 12: Poren
- 13: Endprodukt
- 14: Grenzbereich

- KOH: Kalilauge
- H₂O: Wasser

## Patentansprüche

1. Verfahren zum Herstellen einer katalytisch beschichteten Anionenaustauschmembran, umfassend die folgenden Schritte:
a) Bereitstellen eines Substrats, welches einen Anionen leitenden Membranwerkstoff enthält oder daraus besteht;
b) Bereitstellen einer Zusammensetzung, die mindestens ein Lösemittel, mindestens ein im Lösemittel gelöstes Polymer, mindestens einen partikulären Elektrokatalysator, sowie ein vom Elektrokatalysator verschiedenes, partikuläres anorganisches Material enthält;
c) Auftragen der Zusammensetzung auf das Substrat, sodass das Substrat einen die Zusammensetzung enthaltenden Auftrag erhält;
d) Abreichern des Lösemittels aus dem Auftrag, sodass das Substrat eine Schicht erhält, in welcher der partikuläre Elektrokatalysator sowie das davon verschiedene, partikuläre anorganische Material angereichert und über das Polymer auf dem Substrat immobilisiert sind;
e) Bereitstellen einer wässrigen alkalischen Lösung enthaltend mindestens ein Alkalimetall ausgewählt aus der Gruppe bestehend aus Natrium, Kalium und Lithium;
f) Beaufschlagen der Schicht mit der wässrigen alkalischen Lösung;
g) Umsetzen zumindest eines Teils des partikulären anorganischen Materials mit der alkalischen Lösung zu mindestens einem Produkt innerhalb der Schicht;
h) Auswaschen zumindest eines Teils des Produkts aus der Schicht;
i) Erhalt einer katalytisch beschichteten Anionenaustauschmembran, umfassend das Substrat und darauf aufgebracht die Schicht, wobei die Schicht nunmehr offene Poren aufweist.

2. Verfahren nach Anspruch 1, **dadurch gekennzeichnet, dass** das partikuläre anorganische Material Siliciumdioxid und/oder Aluminiumoxid enthält.

3. Verfahren nach Anspruch 1 oder 2, **dadurch gekennzeichnet, dass** das partikuläre anorganische Material mindestens eine der folgenden Bedingungen erfüllt:
α) das partikuläre anorganische Material weist eine BET-Oberfläche auf, deren Wert zwischen 50 m²/g und 450 m²/g liegt, wobei die BET-Oberfläche bestimmt ist mit Stickstoff-Adsorption gemäß der Methode von Brunauer, Emmett, Teller DOI 10.1021/ja01269a023;
β) das partikuläre anorganische Material umfasst Aggregate von Primärpartikeln;
γ) das partikuläre anorganische Material ist durch Flammpyrolyse erhalten.

4. Verfahren nach Anspruch 1, 2 oder 3, **dadurch gekennzeichnet, dass** das Lösemittel ausgewählt ist aus der Gruppe bestehend aus den folgenden Lösemitteln: Dimethylsulfoxid (DMSO), Ethanol (EtOH), Acetonitril (ACN).

5. Verfahren nach einem der Ansprüche 1 bis 4, **dadurch gekennzeichnet, dass** die Zusammensetzung zusätzlich ein von dem Lösemittel verschiedenes Dispergiermedium enthält.

6. Verfahren nach Anspruch 5, **dadurch gekennzeichnet, dass** das Dispergiermedium ausgewählt ist aus der Gruppe der folgenden Dispergiermedien: Wasser (H₂O), N-Methyl-2-pyrrolidon (NMP), N,N-Dimethylacetamid (DMAC), Aceton (ACT), 2-Propanol (IPA).

7. Verfahren nach einem der Ansprüche 1 bis 6, **dadurch gekennzeichnet**, zumindest ein Teil der Schritte:
f) Beaufschlagen der Schicht mit der wässrigen alkalischen Lösung;
g) Umsetzen zumindest eines Teils des anorganische Materials mit dem Alkalimetall zu einem Produkt innerhalb der Schicht;
h) Auswaschen zumindest eines Teils des Produkts aus der Schicht;
i) Erhalt einer katalytisch beschichteten Anionenaustauschmembran, umfassend das Substrat und darauf aufgebracht die Schicht, wobei die Schicht nunmehr offene Poren aufweist;
innerhalb einer elektrochemischen Zelle ausgeführt werden.

8. Verfahren nach einem der Ansprüche 1 bis 6, **dadurch gekennzeichnet**, zumindest ein Teil der Schritte:
f) Beaufschlagen der Schicht mit der wässrigen alkalischen Lösung;
g) Umsetzen zumindest eines Teils des anorganische Materials mit dem Alkalimetall zu einem Produkt innerhalb der Schicht;
h) Auswaschen zumindest eines Teils des Produkts aus der Schicht;
i) Erhalt einer katalytisch beschichteten Anionenaustauschmembran, umfassend das Substrat und darauf aufgebracht die Schicht, wobei die Schicht nunmehr offene Poren aufweist;
außerhalb einer elektrochemischen Zelle ausgeführt werden.

9. Verfahren nach einem der Ansprüche 1 bis 8, **dadurch gekennzeichnet, dass** die Schritte:
f) Beaufschlagen der Schicht mit der wässrigen alkalischen Lösung;
g) Umsetzen zumindest eines Teils des anorganische Materials mit dem Alkalimetall zu einem Produkt innerhalb der Schicht;
h) Auswaschen zumindest eines Teils des Produkts aus der Schicht;
zumindest teilweise zeitgleich erfolgen.

10. Katalytisch beschichtete Anionenaustauschmembran, erhältlich mit einem Verfahren nach einem der Ansprüche 1 bis 9.

11. Katalytisch beschichtete Anionenaustauschmembran, umfassend ein Substrat, welches einen Anionen leitenden Membranwerkstoff enthält oder daraus besteht und mindestens eine auf dem Substrat aufgebrachte Schicht, wobei in der Schicht ein partikulärer Elektrokatalysator angereichert ist, und wobei der Elektrokatalysator über ein Polymer auf dem Substrat immobilisiert ist, **dadurch gekennzeichnet, dass** die Schicht offene Poren aufweist.

12. Katalytisch beschichtete Anionenaustauschmembran nach Anspruch 10 oder 11, **dadurch gekennzeichnet, dass** die Schicht Siliciumdioxid und/oder Aluminiumoxid enthält, wobei der Gehalt an Siliciumdioxid und Aluminiumoxid in der Summe zwischen 0.2 Gew.-% und 25 Gew.-% beträgt, bezogen auf die Gesamtmasse der Schicht.

13. Vorstufe einer katalytisch beschichteten Anionenaustauschmembran, umfassend ein Substrat, welches einen Anionen leitenden Membranwerkstoff enthält oder daraus besteht und mindestens eine auf dem Substrat aufgebrachte Schicht, wobei in der Schicht ein partikulärer Elektrokatalysator und ein davon verschiedenes, partikuläres anorganisches Material angereichert sind, und wobei der Elektrokatalysator und das anorganische Material über ein Polymer auf dem Substrat immobilisiert sind.

14. Vorstufe nach Anspruch 13, **dadurch gekennzeichnet, dass** die Schicht Siliciumdioxid und/oder Aluminiumoxid enthält, wobei der Gehalt an Siliciumdioxid und Aluminiumoxid in der Summe zwischen 10 Gew.-% und 60 Gew.-% beträgt, bezogen auf die Gesamtmasse der Schicht.

15. Gegenstand nach einem der vorhergehenden Ansprüche 1 bis 14, **dadurch gekennzeichnet, dass** das Polymer Anionen leitend ist.

16. Gegenstand nach Anspruch 15, **dadurch gekennzeichnet, dass** der Membranwerkstoff und das Polymer dieselbe Wiederholeinheit aufweisen.

17. Gegenstand nach einem der Ansprüche 1 bis 16, **dadurch gekennzeichnet, dass** das Polymer und/oder der Membranwerkstoff eine spezifische Leitfähigkeit *S* für Hydroxidionen (OH⁻) aufweist/aufweisen, gemessen nach lonenaustausch in Hydroxid, wobei *S* zwischen 5 mS/cm und 300 mS/cm oder zwischen 50 mS/cm und 150 mS/cm liegt.

18. Gegenstand nach einem der vorhergehenden Ansprüchen, **dadurch gekennzeichnet, dass** der Membranwerkstoff und/oder das Polymer fluorfrei ist/sind.

19. Gegenstand nach einem der vorhergehenden Ansprüchen, **dadurch gekennzeichnet, dass** das Substrat geschlossen ist.
